# EUROPEAN PATENT APPLICATION

(11) **EP 2 725 827 A1**
(43) Date of publication of application: **30.04.2014**
(21) Application number: 13176930.9
(22) Date of filing: 17.07.2013
(51) Int. Cl.: H04W 4/20, H04W 52/02

(54) **Node for a 6LoWPAN network**

(30) Priority: 18.07.2012 IT MI20121247
(71) Applicant: Paradox Engineering SA, 6883 Novazzano (CH)
(72) Inventor: Minetti, Giovanni, 6834 Morbio Inferiore (CH); Calabro', Gaetano, 22100 Como (IT)
(74) Representative: Zardi, Marco

(57) **Abstract**

The invention describes a node (1) for a 6LoWPAN network (IPv6 over Low power Wireless Personal Area Network), comprising a radio receiver module (2) and a timer (3) for activating the radio receiver module (2) at predefined time intervals T1. The node is programmed to enter into the 6LoWPAN network only if the radio receiver module (2) receives a signal addressed to the node.

## Description

### Field of application

The present invention relates to a node for a wireless network or a 6LoWPAN network (IPv6 over Low power Wireless Personal Area Network) comprising a radio receiver module for receiving on a predetermined radio channel associated with the network. In particular, the invention relates to a node of the aforementioned type which is programmed to alternate periods of inactivity, during which the node is disconnected from the network in order to save power, with periods of activity where it is connected to the network.

The present invention also relates to a method for activating a node of the aforementioned type.

### Prior Art

As is known, a node for a wireless network or for a 6LoWPAN network (IPv6 over Low power Wireless Personal Area Network) is a small-size electronic device programmed to perform radio communication with low power consumption. The node is used in various application environments, for example in the industrial automation sector or in home automation, but also in various other applications where it is necessary or advantageous to control remotely a mechanical, electronic or hydraulic apparatus, for example an electricity or water meter, performing interrogation thereof to check for correct operation or to read data.

The network node is particularly advantageous since, in order for it to communicate with other nodes in the network, it does not require wiring and therefore, after being installed on the apparatus to be checked, is substantially ready to receive and transmit, thus allowing remote control of the apparatus.

Merely by way of example, advantageously such a node may be installed on the gas meters distributed within the territory, substantially in each residential building: once the node has been installed and connected to a gas meter, the meter reading may be taken by interrogating the node, for example via a concentrator of the 6LowPAN network, situated close by in the coverage area of the node and in turn connected to the Internet network.

Wireless network nodes and in particular 6LowPAN network nodes are particularly suited for this type of application where communication consists in the exchange of small-volume data, for example the transmission of a meter reading, and is not particularly frequent, thus allowing a node to be powered by a small portable battery.

Furthermore, in order for the nodes to be effectively advantageous, they must be electrically autonomous for long periods of time, thus avoiding frequent on-site maintenance for replacement of the power supply batteries.

The problem of low power consumption has already resulted in a number of solutions which envisage excluding or disconnecting the node from the network during periods of inactivity. For example, if an apparatus, such as a gas meter, must be interrogated at predetermined time intervals, for example once a year, it is programmed to enter into the 6LowPAN network only at said predefined intervals.

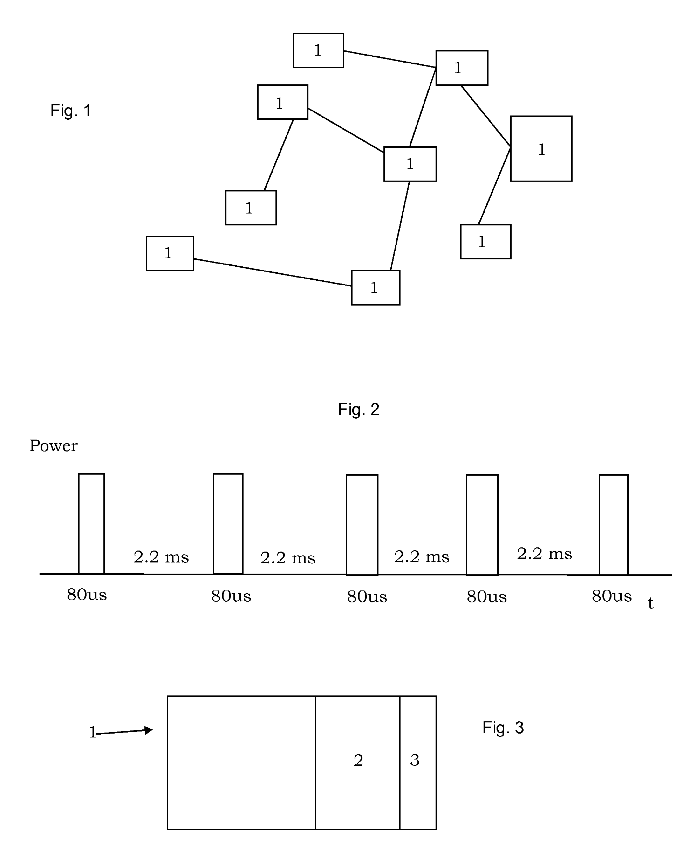

In this connection, the known nodes of the 6LowPAN networks have a duty cycle, i.e. a percentage of useful activity time compared to the total time in question, of about 4%, considering for example a period or time T of inactivity or disconnection from the network of 2.2 seconds and a duration of activity of 80 milliseconds for performing the connection to the network and exchanging data, as schematically shown in Figure 1.

This solution, however, suffers from the significant drawback that, since the node is outside the network for the entire duration of the predefined period T and enters into the network only in a scheduled or programmed manner, it is substantially inaccessible for the entire duration of the period T, for example for 2.2 seconds, this preventing interrogation of the node or the carrying out of non-scheduled or unprogrammed checks, from a remote station.

Moreover, the solution of connecting the node to the network several times during the predefined time period T increases its power consumption, especially if one considers that the connection also comprises a procedure for searching the network, contracting and obtaining an IP address, synchronising with the other nodes in the network, also when this connection to the network is not followed effectively by an exchange of data. In this connection, the known nodes cited above, with a duty cycle of 4%, have an average autonomy of 1.5 years and reducing the time period or period of inactivity according to the known methods would also reduce the autonomy, to less than a solar year.

Moreover, the known nodes also limit the numerical density of the network, i.e. the number of nodes which can be connected thereto. In fact, in 6LowPAN networks it is envisaged that at least one coordinating node or gateway transmits on the radio channel a signal, generally in the form of one or more data packets, which is used by the nodes of a same 6LowPAN network in order to perform synchronization. However, during a time period or period of inactivity of 80 milliseconds, where it is required to perform the network connection procedures, 4 to 6 data packets for synchronization may be received, something which limits the number of nodes in the network, i.e. the numerical density of the network, to about 20 nodes. In other words, the setting of a duty cycle of 4% as in the prior art not only isolates the nodes for longer, but also limits the numerical density of the network, with an inevitable impact on the applications which may be implemented by means of 6LowPAN nodes.

The technical problem forming the basis of the present invention is that of devising a node of a wireless or 6LowPAN network which has a low power consumption compared to the known nodes, but at the same time is able to enter more frequently into the 6LowPAN network, in order to be able to communicate in reception or transmission mode with the other nodes more frequently, without however increasing the electrical consumption, thereby overcoming the limitations and drawbacks which hitherto affect the known nodes.

### Summary of the invention

The solution at the basis of the present invention is that of obtaining an increase in the electrical autonomy of a node in a wireless network, and in particular a 6LoWPAN network (IPv6 over Low power Wireless Personal Area Network), not only excluding the node from the network during the periods of inactivity, but also deactivating the node electrically, substantially switching off all its components for network activity, except for a timer, until a radio signal intended for the node is identified.

In particular, the idea is to incorporate a timer, preferably in the form of hardware, and a radio receiver module in the node, where the timer activates only the radio receiver module between predetermined time periods, and the module is immediately deactivated if it does not identify any radio signal addressed to it, without the node being connected to the network. Vice versa, if the radio receiver module identifies the radio signal addressed to it, the node executes the network connection procedures, i.e. enters into the wireless or 6LoWPAN network, in order to communicate.

Advantageously, if the node is affected only seldom by the network traffic, its power consumption is very small, being substantially limited to activation at predetermined intervals of the radio receiver module and to the power consumption of the timer, without ever accessing the network. Depending on the type of application managed by the node, it is possible to set prolonged time periods between successive activation operations of the radio module. Moreover, if the radio module does not identify a signal addressed to it, it is deactivated, i.e. without using any power to connect the node in the wireless or 6LoWPAN network, which would involve a plurality of operations, such as contracting and obtaining a network address and synchronisation with the other nodes, which result in heavy electric power consumption.

For applications where the presence of the node in the network is required once for each time period T, for example once a year, it is possible to activate the radio receiver module between time periods T1<T, for a predetermined maximum activation time t'. According to the present invention it is possible advantageously to activate the radio receiver module more frequently, for example each month or n times during the period T, this allowing interrogation of the node, but connecting it to the network only when necessary, without having to wait for the entire period T to lapse. All this involves a limited power consumption since, if the radio receiver module does not identify any signal addressed to it in any of the n interrogations, it is immediately deactivated, without connection to the 6LowPAN network.

According to this proposed solution, the aforementioned technical problem is also solved by a node for a wireless network, preferably a 6LoWPAN network (IPv6 over Low power Wireless Personal Area Network), comprising a radio receiver module and a timer for activating the radio receiver module between predefined time periods T1, the node being programmed to enter into the 6LoWPAN network only if the radio receiver module receives a signal addressed to the node.

In other words, only the timer is powered during the periods of inactivity of the radio receiver module; moreover, only the timer and the radio receiver module are powered during the search for the radio signal on the predefined radio channel, and the other electrical components of the node are deactivated.

According to an aspect of the present invention it is envisaged that the radio module of each node may be identified by a unique and distinctive node number and that the radio signal comprises this distinctive number. In one embodiment, the distinctive number is associated with an IP address of the node, the latter, however, not being initialized within the network until the radio receiver module is activated and identifies the IP in the radio signal.

According to another aspect of the invention, the node is equipped with an autonomous power supply which powers both the timer and the radio receiver module and the other electrical components of the node. In a preferred embodiment, which is particularly convenient when the node is installed in a luminous environment, the autonomous power supply comprises or is connected to a photovoltaic panel for recharging. This autonomous power supply is for example a battery, which is preferably rechargeable.

According to another aspect of the invention, the radio receiver module checks for the presence of the radio signal addressed to it, also known as a WOR message, on a predefined radio channel, which thus reduces the activation time of the radio module, since it is not required to scan a band comprising several radio channels in order to identify the signal, but only to read the predefined radio channel.

Preferably, the radio receiver module is immediately deactivated if it does not detect any signal on the predefined radio channel. Deactivation is very rapid since it is merely required to check whether the channel is empty. In this case, the activation time of the radio module is substantially less than the predefined maximum activation time t'.

According to another aspect of the invention, the radio receiver module reads a data packet if it detects a signal on the predefined radio channel and is in any case immediately deactivated if the data packet does not comprise the address of the node. The activation time is short because it is sufficient to detect that in the channel used for sending the signal there is no data packet addressed to the node. In this case also, the activation time of the radio module is substantially less than the predefined maximum activation time t'.

Vice versa, if the radio receiver module reads a data packet addressed to the node, other electrical components, i.e. the components for network connectivity of the node, are powered electrically to carry out a synchronisation procedure with other nodes of the 6LoWPAN network or with a gateway, for connection to the network and subsequent receiving or transmitting communication. It is envisaged that the predetermined maximum activation time t' is sufficient to allow the radio receiver module to receive completely the radio signal, i.e. the WOR message, and carry out complete decoding of the data packet, checking whether the WOR message has been actually addressed to the node. In this case, that is only if the radio receiver module identifies a WOR message or radio signal specifically addressed to the node, are the other electrical components of the node activated, for entry of the node into the wireless or 6LowPAN network. According to the proposed solution described above, the technical problem is also solved by a method for activating a node in a 6LoWPAN network (IPv6 over Low power Wireless Personal Area Network), comprising the step of counting predefined time periods T1 by means of a timer of the node and the step of activating a radio receiver module of the node between the predefined time periods, the method comprising the step of connecting the node to the 6LoWPAN network only if its radio receiver module receives a signal specifically addressed to it.

Further characteristic features and advantages of the node and the method for activating it in a wireless or 6LowPAN network according to the present invention will emerge from the following description of a preferred example of embodiment thereof, provided by way of a nonlimiting example, with reference to the accompanying drawings.

### Brief description of the drawings

Figure 1 shows schematically a 6LowPAN network comprising a plurality of nodes according to the prior art.
Figure 2 is a graph which shows the power consumption levels of a node of the 6LowPAN network according to Figure 1 as a function of time.
Figure 3 is a schematic illustration of the node according to the present invention.

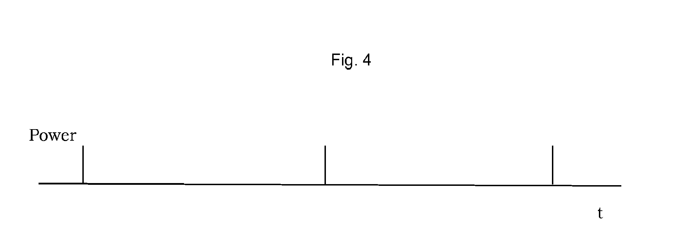

Figure 4 is a graph which shows the power consumption levels of the node according to Figure 3 in a 6LowPAN network as a function of time.

### Detailed description

With reference to Figure 3, it is schematically represented a node 1 of a wireless network according to the present invention and preferably of a 6LowPAN network (Pv6 over Low power Wireless Personal Area Network). The node incorporates a radio receiver module 2 or radio module 2 and a timer 3 for activation of the radio module 2 between predefined time periods T1 and is programmed to enter into the network 6LoWPAN only if the radio module 2 receives a signal addressed to the node.

Between the predefined periods T1, the radio module is activated for a predetermined maximum time t', sufficient to check for the presence of one or more radio signals on a predefined radio channel and, if present, check whether these radio signals are addressed to the receiver module. The predetermined maximum activation time t' of the radio module is less than the time employed by the node to enter into the 6LowPAN network and is significantly less when the radio channel is empty.

Advantageously, if the radio module 2 does not intercept any radio signal addressed to the node, the node does not carry out any procedure for connection to the network, this making it possible to achieve savings in terms of power consumption and increase significantly the electrical autonomy of the node. In this connection, the applicant has noted that the search for a radio signal addressed to the node is much faster and uses less electric power than connection of the node to the network, this last comprising searching of the 6LowPAN network, contracting and acquisition of a network address and synchronisation with the other nodes of the network.

Advantageously the duty cycle of the node according to the present invention, i.e. the percentage of useful activity compared to the time considered, is much greater than the duty cycle of a node according to the prior art.

It is envisaged that the corresponding savings in power, obtained by avoiding connecting the node to the network when there is no radio signal addressed to the radio module, are at least partly used to increase the residence or connection time of the node in the network after this radio signal is actually received, for example for a time period greater than the 80 milliseconds of activity of the known nodes, this prolonged time period allowing a greater number of data packets to be received and transmitted in the 6LowPAN network. The node programmed to remain connected for a long time to the network, following identification by the radio module of the signal addressed to it, allows an increase in the numerical density of the nodes in the network, which is proportional to the number of data packets which can be exchanged during the period of connection of the node to the network. Thus, while increasing the network autonomy of the single nodes compared to the autonomy of 1.5 years of the known nodes, according to the present invention it is possible increase also the numerical density of the nodes in the 6LowPAN network, while maintaining the duty cycle conditions and low consumption for up to 50 nodes per concentrator or gateway.

According to the present invention, the timer may have a limited duration, limiting the period of inaccessibility of the node and allowing more frequent interrogations. Advantageously, while having an autonomy greater than the known nodes, for example greater than 1.5 years, the radio module according to the present invention may check a request for access to the network much more frequently than the known nodes, thus allowing the management of various types of applications in which the duration of the electrical autonomy is less critical than the response time.

According to an aspect of the present invention the node has substantially three operating modes: a first mode where all the electrical components except for the timer are switched off, a second mode where only the radio module and the timer are switched on and a third module where the entire node is switched on. For some applications where the node must communicate in the network very seldom, for example once a year, characterized by a prolonged period of deactivation of the electrical components of the node, a timer may be set for a shorter period, for example one month, thus allowing the electrical components of the node to be activated and the node to be connected to the network, without increasing the consumption.

Essentially the timer activates the receiver module in order check for the presence of the signal addressed to the node, below also referred to as a WOR (Wake up On Radio) signal, for waking up the node.

The timer is set to T1 seconds, for example T1=20. Every T1 seconds and for a predetermined maximum activation time t', for example 1.5 milliseconds, the radio receiver module is activated so as to receive a WOR message which may be present on the radio channel, this message comprising a specific sequence of information associated with at least one node of the network.

Advantageously, according to the method of the present invention, no synchronisation of the radio receiver module of the various nodes is required for reception of the WOR message.

In this connection, in order to ensure that the radio receiver module of each mode is able to receive the WOR message, the latter is transmitted on the radio channel for a time greater than T1, i.e. greater than the time period during which the module is electrically deactivated, thus allowing also an electrically deactivated receiver module to have time to be electrically reactivated by the timer and be able to receive entirely the sequence of information of the WOR message during the predetermined maximum activation time t' of the radio module.

For example, in an embodiment of the invention, a gateway of the wireless or 6LowPAN network emits the WOR message on the radio channel and the WOR message is propagated by the radio modules of the other nodes in the network so that it remains in the radio channel for a time greater than T1, preferably the same as or greater than T1+t'.

In this case the WOR message is broadcasted by the gateway on the radio channel and transmitted repeatedly by all the radio modules of the network over the radio channel. During this step, no data is exchanged on the wireless or 6LowPAN network to which the nodes are not actually connected, in order to transmit continuously the WOR message on the radio channel, making use of the whole of the available band. According to this embodiment, the nodes are not connected to and disconnected from the wireless or 6LowPAN network in the manner described with reference to the prior art, for example 80 milliseconds of activity alternated with 2.2 seconds of inactivity, but are completely disconnected from the network for the entire duration of transmission of the WOR message.

In another embodiment it is envisaged transmitting the WOR message on a dedicated radio channel which does not interfere with the network traffic of the 6LowPAN or wireless network 6. In particular, the dedicated radio channel has a different frequency compared to a transmission frequency of the wireless or 6LowPAN network.

In all cases, it is envisaged performing incremental checks of the WOR message on the radio channel in order to minimize the consumption associated with this check. For example, upon expiry of the timer time, the radio module checks first the power present on the radio channel, this information being per se already sufficient to determine whether or not transmission of the WOR message is in progress.

If the power detected is less than a predetermined value, the receiver module is immediately deactivated since no WOR messages are present on the channel; the power detection operation requires only a few tens of microseconds and is less than the predetermined maximum activation time t'.

If, on the other hand, a power greater than the predefined value is detected, the radio receiver module carries out incremental decoding of the WOR message, based on its preamble, and then considers the destination address in the message and finally a code for waking up a specific node, necessary for electrical activation of the node and its entry into the network.

In particular, if during the decoding process any of the information in the WOR message is not correctly decoded or if an item of said information is not addressed to the radio receiver module, the latter is immediately electrically deactivated. In this case also, the check lasts a lot less than the predetermined maximum activation time t' of the radio receiver module.

The predetermined maximum activation time t' is sufficient to receive completely the WOR message, decode correctly the WOR message, i.e. a message associated with a power greater than the predetermined value, with a correct preamble, addressed to the radio module of the node and with the correct code for waking it up.

Advantageously, according to the present invention, if the node is affected only seldom by the network traffic, its power consumption is very small, being substantially limited to the activation, between predetermined time periods T1 of the radio receiver module, for a predetermined maximum activation time t' of the module, and to the power consumption of the timer, without ever accessing the network.

Advantageously, depending on the type of application managed by the node, it is possible to set prolonged time periods T1 between successive activation operations of the radio module. Moreover, if the radio module does not identify a signal addressed to it, it is immediately switched off, before the predetermined maximum activation time t' has lapsed, thus further reducing the consumption. In any case, if the entry of the node in the network by means of a WOR message or radio signal is not explicitly requested, it is avoided using power in order to connect the node in the wireless or 6LoWPAN network, which would involve a plurality of operations, such as the contracting and obtaining a network address and synchronisation with the other nodes, resulting in heavy electric power consumption.

## Claims

1. Node (1) for a 6LoWPAN network (IPv6 over Low power Wireless Personal Area Network) or wireless network comprising a radio receiver module (2) and a timer (3) for activating the radio receiver module (2) between predefined time periods T1, said node being programmed to enter into the 6LoWPAN network only if the radio receiver module (2) receives a signal addressed to the node.

2. Node (1) according to claim 1, **characterised in that** during said predefined time periods T1, only the timer is electrically powered in the node.

3. Node (1) according to claim 1, **characterised in that** the timer only activates the radio receiver module, said activation comprising the electrical power supply of the module for a predetermined maximum duration t'.

4. Node (1) according to claim 3, **characterised in that** the radio receiver module is immediately deactivated if it does not detect any signal on a predefined radio channel.

5. Node (1) according to claim 3, **characterised in that** the radio receiver module reads a data packet if it detects a signal on a predefined radio channel and it is deactivated if the data packet does not comprise an address of the node.

6. Node (1) according to claim 3-5, **characterised in that** said deactivation comprises a suspension of the electrical power supply of the radio receiver module.

7. Node (1) according to claim 3, **characterised in that**, if the radio receiver module reads a data packet addressed to the node (1), the node (1) is electrically powered and carries out a synchronisation procedure with other nodes (20) of the 6LoWPAN network or with a gateway (21), in order to communicate.

8. Node according to claim 5, **characterised in that** the radio receiver module transmits the signal over the predefined channel for at least said predefined time period before being deactivated, to allow the receiver modules of other nodes to receive the signal.

9. Node according to claim 8, **characterised in that** it is outside of the wireless or 6LowPAN network during the transmission of said signal over the predefined channel or **in that** it transmits said signal over a dedicated radio channel, having a different frequency with respect to a transmission frequency of the wireless or 6LowPAN network.

10. Method for activating a node (1) in a 6LoWPAN network (IPv6 over Low power Wireless Personal Area Network) comprising the step of counting predefined time periods T1 by means of a timer (3) of the node and the step of activating a radio receiver module (2) of the node when said predefined time periods lapse, the method comprising the step of making the node access the 6LoWPAN network only if its radio receiver module (2) receives a signal addressed to it.
